# FASCICULE DE BREVET EUROPEEN

(11) **EP 0 704 236 B1**
(45) Date de publication et mention de la délivrance du brevet: **22.03.2000**
(21) Numéro de dépôt: 95401943.6
(22) Date de dépôt: 24.08.1995
(51) Int. Cl.: B01D 63/06, B01D 29/35, B01D 46/24

(54) **Support monolithe poreux pour membrane de filtration**
Monolitischer, poröser Träger für Filtrationsmembrane
Monolithic porous support for filtration membrane

(30) Priorité: 28.09.1994 FR 9411568
(43) Date de publication de la demande: 03.04.1996
(73) Titulaire: Orelis, 92408 Courbevoie Cedex (FR)
(72) Inventeur: Joulin, Jean-Pierre, F-75020 Paris (FR); Thoraval, Valérie, F-69480 Morance (FR)
(74) Mandataire: Delenne, Marc

(56) Documents cités:
- WO-A-93/07959
- JOURNAL OF MEMBRANE SCIENCE, vol. 39, 1988 AMSTERDAM, NL, pages 221-241, H.P. HSIEH 'Microporous Alumina Membranes'

## Description

La présente invention concerne un support monolithe poreux notamment en matériau céramique pour membrane de filtration.

Ces membranes sont connues depuis longtemps pour leurs propriétés séparatrices et se développent rapidement dans de nombreux secteurs d'activité tels que l'agro-alimentaire, les biotechnologies, le traitement des eaux potables et industrielles, l'industrie pharmaceutique et nucléaire.

Les monolithes percés de canaux sur lesquels sont déposées les membranes, comme par exemple ceux décrits dans US-A-4069157, EP-A-470340 et EP-A-585152, ont le double avantage de présenter une grande surface d'échange de la membrane par unité de volume et un très bon facteur de perméabilité. Le facteur de perméabilité est par exemple défini par US-A-4069157.

En outre ces supports et membranes, en particulier quand ils sont en matériau inorganique et/ou céramique, du fait de leur tenue mécanique et de leur inertie chimique, biologique et thermique présentent une très longue durée de vie d'utilisation et peuvent fonctionner dans des conditions extrêmes d'utilisation (pH, température, pression, radiations ...).

Ces supports posent toutefois dans certains cas des problèmes d'utilisation.

Du fait que les canaux sont situés dans des zones différentes du support, ils ne fonctionnent pas de la même façon et on constate que certains canaux sont sujets à un colmatage préférentiel.

Par ailleurs, il s'avère difficile de filtrer des fluides très visqueux et/ou hétérogènes qui comportent des matières solides fibreuses d'origine textile ou papetière.

En effet, dans le cas de monolithes multicanaux connus ayant en général plus de 7 canaux de section carrée ou circulaire, tels que décrits dans US-A-4069157 et EP-A-470340, une fibre peut se trouver dans plusieurs canaux à la fois, à l'entrée du monolithe, et la répétition du phénomène peut entraîner l'obstruction du monolithe.

Les monolithes à multiples petits canaux ne sont donc pas adaptés à la filtration de fluides de ce type.

WO 93 07959 A décrit un support monolithe poreux pour membrane de filtration comportant des canaux disposés à l'intérieur du support de façon identique. L'épaisseur des cloisons inter-canaux augmente vers l'extérieur.

La présente invention, notamment pour résoudre le problème ci-dessus, propose une solution technique qui permet, d'une part, d'augmenter le diamètre des canaux et, d'autre part, de réduire le nombre des canaux, tout en gardant une surface filtrante la plus grande possible et des propriétés mécaniques convenables.

La présente invention concerne en effet un support monolithe poreux pour membranes de filtration tel que revendiqué dans la revendication 1, comportant des canaux dont la surface interne supporte les membranes, caractérisé en ce que ledit support comporte au moins deux canaux, chaque canal présentant :
- (a) des sections sensiblement identiques,
- (b) des cloisons inter-canaux et avec l'extérieur du support d'épaisseur sensiblement constante et
- (c) une cloison avec l'extérieur du support sensiblement de même surface.

On recommande que le nombre de canaux soit compris entre 2 et 8 inclus, de préférence entre 3 et 4 inclus.

Par ailleurs les angles vifs des sections des canaux sont arrondis pour diminuer la perte de charge et le colmatage.

Le support présente une section droite présentant un axe central de symétrie. Cette section droite peut être avantageusement circulaire ou hexagonale.

Dans le monolithe selon l'invention, tous les canaux sont disposés à l'intérieur du monolithe de façon identique. Dans ces conditions, tous les canaux fonctionnent de façon analogue au cours de la filtration, c'est-à-dire que tous les canaux filtrent et se colmatent de façon sensiblement identique et il n'y a pas de colmatage préférentiel.

En outre, le support selon l'invention, tout en conservant l'avantage des monolithes par rapport au monotube, permet d'obtenir une plus grande surface développée des membranes pour un encombrement donné tout en conservant une section importante des canaux pour le passage du fluide à filtrer.

Si le monolithe selon l'invention est de préférence en matériau céramique, comme par exemple selon l'enseignement de US-A-4069157, EP-A-470340 et EP-A-585152 précités, il peut être également en métal, en carbone, et, de façon générale, en matériaux inorganiques quelconques.

Dans le cas de l'utilisation de matière céramique, on recommande selon l'invention, dans le cas de l'utilisation d'un support de section cylindrique, un diamètre extérieur avantageusement compris entre 6 et 40 mm et une longueur comprise entre 10 cm et 2 m. L'épaisseur des cloisons inter-canaux et de chaque canal avec la surface extérieure du support est généralement comprise entre 0,5 et 3 mm.

Les supports selon l'invention peuvent être préparés par des procédés classiques d'extrusion d'une pâte céramique à travers une filière de forme adaptée. On recommande dans ce cas de suivre l'enseignement de EP-A-585152 précité.

De préférence, les filières utilisées ont une forme adaptée de manière à ce que les angles vis-à-vis des canaux soient arrondis.

Le support est ensuite fritté. Ce support a généralement un diamètre de pore compris entre 2 et 10 µm. Sur ce support, on dépose, à l'intérieur des canaux et éventuellement à la surface extérieure du support, une membrane minérale et/ou organique de micro filtration (diamètre de pore compris entre 0,1 et 1,5 µm) ou d'ultrafiltration (diamètre de pore compris entre 2 nm et 0,1 µm). Ces membranes sont préparées par dépôt d'au moins une couche de particules inorganiques et/ou de polymère en utilisant par exemple les matières premières et la méthode décrite dans la demande de brevet EP-A-585152 précitée.

Les monolithes selon l'invention sont plus particulièrement intéressants pour filtrer des suspensions très chargées en matières solides et/ou très visqueuses telles que, par exemple, certains moûts de fermentation, des effluents de papèterie, des suspensions de produits fibreux et des produits pétroliers.

D'autres avantages et caractéristiques de l'invention apparaîtront à la lecture de l'exemple suivant de réalisation donné à titre illustratif nullement limitatif, référence sera faite au dessin annexé sur lequel :
- la figure 1 est une coupe d'un support cylindrique à 3 canaux,
- la figure 2 est une coupe d'un support cylindrique à 5 canaux,
- la figure 3 est une coupe d'un support de section hexagonale à 6 canaux,
- la figure 4 est une coupe d'un support de section hexagonale à 4 canaux.

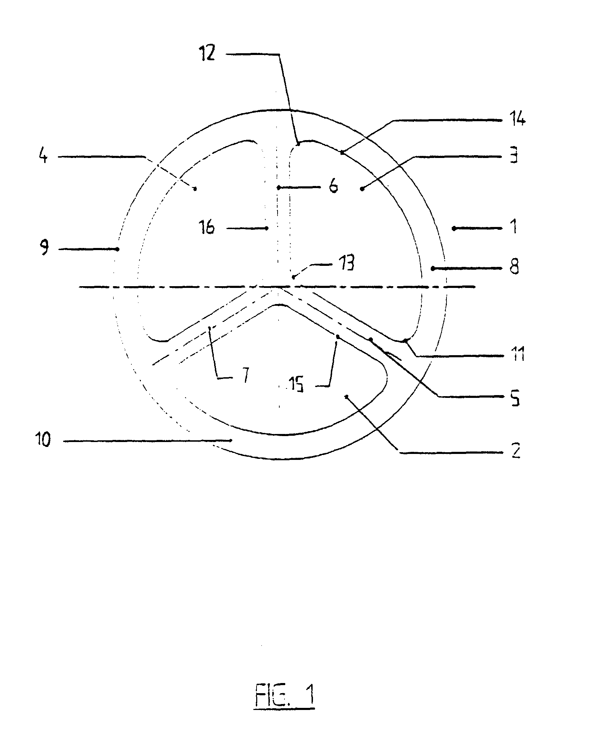

Sur la figure 1, on voit un support monolithe 1 en céramique comportant 3 canaux 2, 3, 4 sensiblement identiques.

On voit que chaque canal présente des sections de forme analogue, des cloisons 5, 6 et 7 inter-canaux d'épaisseur sensiblement constante, chaque canal présentant en outre une cloison 8, 9 et 10 avec l'extérieur du support de même épaisseur et de même surface.

On voit en outre que les angles vifs 11, 12 et 13 sont arrondis en vue d'améliorer la circulation du fluide à filtrer et de faciliter le dépôt de la membrane 14, 15, 16 déposée à la surface interne respectivement de chaque canal 2, 3 et 4.

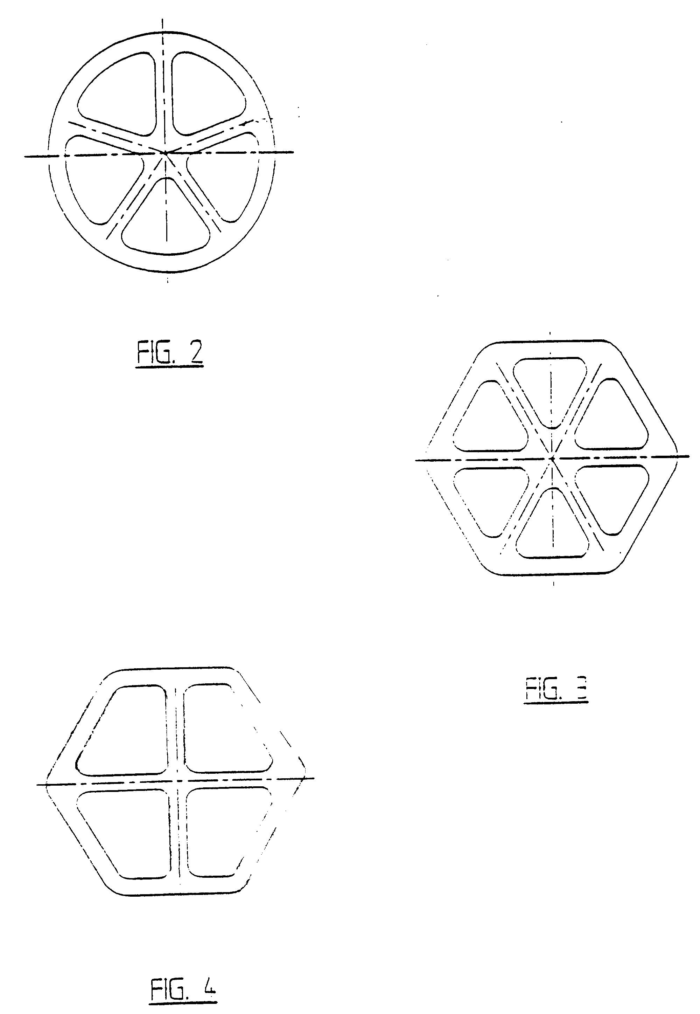

Sur la figure 2, on voit qu'un support de section circulaire comporte 5 canaux identiques.

Sur les figures 3 et 4, on voit qu'un support de section hexagonale comporte respectivement 6 et 4 canaux identiques.

## Revendications

1. Support monolithe poreux (1) pour membrane de filtration comportant des canaux (2, 3) dont la surface interne supporte les membranes (14, 15), dans lequel ledit support (1) présente une section droite présentant un axe central de symétrie et comporte au moins deux canaux (2, 3), tous les canaux (2, 3) étant disposés à l'intérieur du support (1) de façon identique et présentant :
- des sections sensiblement identiques,
- une cloison (8, 9) avec l'extérieur du support sensiblement de même surface, et
- des cloisons avec l'extérieur du support (8, 9) d'épaisseur sensiblement constante,
caractérisé en ce que tous les canaux (2, 3) possèdent des cloisons inter-canaux (5, 6) d'épaisseur sensiblement constante.

2. Support selon la revendication 1, caractérisé en ce que le nombre des canaux (2, 3) est compris entre 2 et 8 inclus, de préférence entre 3 et 4 inclus.

3. Support selon l'une des revendications 1 et 2, caractérisé en ce que les angles vifs (11, 12) des sections des canaux (2, 3) sont arrondis.

4. Support selon l'une des revendications 1 à 3, caractérisé en ce que le support (1) présente une section droite choisie parmi une section circulaire et une section hexagonale.

5. Support selon l'une des revendications 1 à 4, caractérisé en ce que le support (1) présente une section droite circulaire et qu'il est en matière céramique.

6. Support selon la revendication 5, caractérisé en ce qu'il possède un diamètre extérieur compris entre 6 et 40 mm.

7. Support selon l'une des revendications 5 et 6, caractérisé en ce qu'il possède une longueur comprise entre 10 cm et 2 m.

8. Support selon l'une des revendications 5 à 7, caractérisé en ce que l'épaisseur des cloisons inter-canaux et de chaque canal avec la surface extérieure du support est comprise entre 0,5 et 3 mm.

## Patentansprüche

1. Monolitischer poröser Träger (1) für eine Filtermembran, mit Kanälen (2, 3), deren innere Oberfläche die Membranen (14, 15) trägt, in dem der Träger (1) einen Querschnitt aufweist, der eine zentrale Symmetrieachse aufweist, und mindestens zwei Kanäle (2, 3) umfaßt, wobei alle Kanäle (2, 3) im Innern des Trägers (1) in identischer Weise angeordnet sind und aufweisen:
- im wesentlichen identische Querschnitte,
- eine Trennwand (8, 9) zu dem Äußeren des Trägers von im wesentlichen gleicher Oberfläche, und
- Trennwände zu dem Äußeren des Trägers (8, 9) von im wesentlichen konstanter Dicke,
dadurch gekennzeichnet, daß alle Kanäle (2, 3) Zwischenkanaltrennwände von im wesentlichen konstanter Dicke aufweisen.

2. Träger nach Anspruch 1, dadurch gekennzeichnet, daß die Zahl der Kanäle (2, 3) zwischen einschließlich 2 und 8 liegt, vorzugsweise zwischen einschließlich 3 und 4.

3. Träger nach einem der Ansprüche 1 oder 2, dadurch gekennzeichnet, daß die spitzen Winkel (11, 12) der Kanalabschnitte (2, 3) abgerundet sind.

4. Träger nach einem der Ansprüche 1 bis 3, dadurch gekennzeichnet, daß der Träger (1) einen Querschnitt aufweist, der aus einem kreisförmigen Querschnitt und einem sechseckigen Querschnitt ausgewählt ist.

5. Träger nach einem der Ansprüche 1 bis 4, dadurch gekennzeichnet, daß der Träger (1) einen kreisförmigen Querschnitt aufweist und aus keramischem Material besteht.

6. Träger nach Anspruch 5, dadurch gekennzeichnet, daß er einen Außendurchmesser zwischen 6 und 40mm aufweist.

7. Träger nach einem der Ansprüche 5 oder 6, dadurch gekennzeichnet, daß er eine Länge zwischen 10cm und 2m aufweist.

8. Träger nach einem der Ansprüche 5 bis 7, dadurch gekennzeichnet, daß die Dicke der Zwischenkanaltrennwände und der Trennwände jedes Kanals zu der äußeren Oberfläche des Trägers zwischen 0,5 und 3mm liegt.

## Claims

1. Porous monolithic support (1) for a filtration membrane comprising channels (2, 3), the internal surface of which supports the membranes (14, 15), in which the said support (1) has a cross section exhibiting a central axis of symmetry and comprises at least two channels (2, 3), all the channels (2, 3) being positioned identically inside the support (1) and exhibiting:
- substantially identical sections,
- a partition (8, 9) with the outside of the support of substantially the same surface area, and
- partitions with the outside of the support (8, 9) of substantially constant thickness,
characterized in that all the channels (2, 3) have interchannel partitions (5, 6) of substantially constant thickness.

2. Support according to claim 1, characterized in that the number of the channels (2, 3) is between 2 and 8 inclusive, preferably between 3 and 4 inclusive.

3. Support according to either of claims 1 and 2, characterized in that the sharp angles (11, 12) of the sections of the channels (2, 3) are rounded.

4. Support according to one of claims 1 to 3, characterized in that the support (1) exhibits a cross section chosen from a circular section and a hexagonal section.

5. Support according to one of claims 1 to 4, characterized in that the support (1) exhibits a circular cross section and in that it is made of ceramic material.

6. Support according to claim 5, characterized in that it has an external diameter of between 6 and 40 mm.

7. Support according to either of claims 5 and 6, characterized in that it has a length of between 10 cm and 2 m.

8. Support according to one of claims 5 to 7, characterized in that the thickness of the interchannel partitions and of each channel with the external surface of the support is between 0.5 and 3 mm.
